# EUROPÄISCHE PATENTSCHRIFT

(11) **EP 0 622 540 B1**
(45) Veröffentlichungstag und Bekanntmachung des Hinweises auf die Patenterteilung: **25.09.1996**
(21) Anmeldenummer: 93119407.0
(22) Anmeldetag: 02.12.1993
(51) Int. Cl.: F02M 31/135

(54) **Heizmodul für eine Verbrennungskraftmaschine**
Heating device for an internal combustion engine
Module de chauffage pour un moteur à combustion interne

(30) Priorität: 30.04.1993 DE 4314283
(43) Veröffentlichungstag der Anmeldung: 02.11.1994
(73) Patentinhaber: Firma Carl Freudenberg, D-69469 Weinheim (DE)
(72) Erfinder: Kurr, Klaus, Dr., D-69469 Weinheim (DE); Meinig, Uwe, D-69469 Weinheim (DE); Spies, Karl-Heinz, Dr., D-69488 Birkenau (DE)

(56) Entgegenhaltungen:
- EP-A- 0 570 919
- WO-A-93/02284
- DE-A- 3 917 107

## Beschreibung

Die Erfindung betrifft ein Heizmodul für eine Verbrennungskraftmaschine mit zumindest einem Saugkanal, wobei im Saugkanal ein allseitig umströmbares, elektrisch beheizbares Heizelement angeordnet ist, das mit Anschlußklemmen an eine elektrische Spannungsquelle anschließbar ist und wobei das Heizelement durch ein schichtweise aufgebautes Verbundteil gebildet ist, das einen quer zur Strömungsrichtung rinnenförmigen Querschnitt aufweist.

Ein solches Heizmodul ist aus der WO-A-93 022 84 bekannt. Das Heizelement besteht aus einer emaillierten Metallplatte oder einer Platte aus keramischem Werkstoff, wobei auf der der Einspritzdüse zugewandten Seite der Platte eine Heizspirale aufgedruckt ist.

Ein weiteres Heizmodul ist aus der EP-A-0 469 261 bekannt. Das Heizelement ist plattenförmig ausgebildet und in einem spitzen Winkel gegen den eingespritzten Kraftstoffstrahl ausgerichtet, wodurch ein geringer Strömungswiderstand innerhalb des Saugkanals bedingt ist. Dabei ist allerdings zu beachten, daß aufgrund der eben ausgebildeten Heizfläche eine nachteilige Benetzung der in der Warmlaufphase noch kalten Saugkanal-Wände nicht verhindert werden kann. Eingespritzte Kraftstoffbestandteile, die nicht vollständig zerstäubt, sondern durch größere Tröpfchen gebildet sind und wegen ihrer relativ größeren Massenträgheit nicht spontan der Luftströmung folgen können, gleiten über die ebene Oberfläche des Heizelements unverdampft in den Saugkanal. Hinsichtlich guter Kaltlaufeigenschaften der anschließenden Verbrennungskraftmaschine ist das wenig befriedigend.

Der Erfindung liegt die Aufgabe zugrunde, einen Heizmodul der eingangs genannten Art derart weiterzuentwickeln, daß während der Warmlaufphase der Verbrennungskraftmaschine eine Benetzung der kalten Saugrohr-Wand und damit eine Kraftstoff-Filmbildung verhindert wird und der Verbrennungskraftmaschine nur ein Kraftstoff-Luft-Gemisch mit weitgehend vollständig verdampften Kraftstoffbestandteilen zugeführt wird.

Diese Aufgabe wird erfindungsgemäß durch die kennzeichnenden Merkmale von Anspruch 1 gelöst. Auf vorteilhafte Ausgestaltungen nehmen die Unteransprüche Bezug.

Im Rahmen der vorliegenden Erfindung ist es vorgesehen, daß das Heizelement eine Oberfläche aus metallischem Werkstoff umfaßt, wobei zwischen einer rinnenförmigen Oberflächenschicht und einer darunterliegenden Schicht eine flexible Leiterbahn aus elektrisch leitfähigem Werkstoff angeordnet ist und wobei die Leiterbahn und der metallische Werkstoff adhäsiv verbunden sind. Hierdurch läßt sich der Kraftstoffüberschuß im Luft-Kraftstoff-Gemisch (Anfettung) auch bei nicht betriebswarmem Motor unter Beibehaltung guter dynamischer Laufeigenschaften reduzieren, so daß sich sowohl der Kraftstoffverbrauch als auch die Kohlenwasserstoff- und die Kohlenmonoxidemissionen verringern lassen. Hierbei ist von Vorteil, daß das Verbundteil insgesamt nur eine geringe Materialstärke aufweist, was hinsichtlich eines möglichst geringen Strömungswiderstandes innerhalb des Saugkanals und der geringen thermischen Trägheit von hervorzuhebender Bedeutung ist. Der rinnenförmige Querschnitt bewirkt, daß der nur unvollständig zerstäubte Anteil des Kraftstoffs, der durch größere Tröpfchen gebildet ist, auf das Heizelement auftrifft und zuverlässig so lange auf dem Heizelement gehalten wird, bis er infolge der erhöhten Temperatur auf dem Heizelement verdampft. Dadurch wird verhindert, daß die während der Warmlaufphase kalte Wandung, die den Saugkanal begrenzt, mit unverdampften Kraftstoffbestandteilen benetzt wird. Das Kaltlaufverhalten Verbrennungskraftmaschine und insbesondere die Emissionen werden dadurch günstig beeinflußt.

Das Heizelement umfaßt eine Oberfläche aus metallischem Werkstoff, wobei zwischen einer rinnenförmigen Oberflächenschicht und einer darunterliegenden Schicht eine flexible Leiterbahn aus elektrisch leitfähigem Werkstoff angeordnet ist und wobei die Leiterbahn und der metallische Werkstoff adhäsiv verbunden sind. Hierbei ist von Vorteil, daß die Leiterplatte vollständig von dem metallischen Werkstoff umschlossen ist, der eine gute Wärmeleitfähigkeit aufweist und dadurch vor äußeren Einflüssen zuverlässig geschützt ist. Gleichbleibend gute Gebrauchseigenschaften während einer langen Gebrauchsdauer sind dadurch bedingt. Die adhäsive Verbindung zwischen der Leiterplatte und dem metallischen Werkstoff, der die Oberfläche bildet, kann beispielsweise durch eine beiderseitig klebende Folie erfolgen, die den Wärmeübergang von der Leiterbahn zur Oberfläche des Heizelements nur unwesentliche beeinflußt.

Der metallische Werkstoff kann durch zwei Aluminiumbleche gebildet sein, die je eine Dicke von 0,2 bis 1,0 mm, bevorzugt von 0,3 bis 0,7 mm aufweisen. Hierbei ist von Vorteil, daß die Herstellung des Heizelements durch einen einfachen Umformvorgang des zunächst ebenen Verbundteils erfolgen kann. Die Verwendung von Aluminiumblechen ist hinsichtlich einer guten Wärmeleitung und einer preisgünstigen Verfügbarkeit von Vorteil. Davon abweichende Materialien , beispielsweise Kupferbleche, die ebenso eine gute Wärmeleitfähigkeit aufweisen, können ebenfalls Verwendung finden.

Die Aluminiumbleche können mit einstückig angeformten Haltestegen versehen sein, die an der den Saugkanal begrenzenden Wandung festgelegt sind. Die Haltestege sind bei gleichzeitiger Berücksichtigung einer strömungsgünstigen Gestaltung bis zum Bereich der Einspannung derart geführt, daß sich bezüglich der Hauptschwingrichtung bezogen auf die durch Massenkräfte verursachte Schwingbeschleunigung ein großes Flächenträgheitsmoment und daraus resultierend eine große Steifigkeit sowie in Verbindung mit der geringen Masse des Heizelements eine hohe Schwingeigenfrequenz ergibt. Weiterhin ist von Vorteil, daß sich durch die Festlegung der Haltestege an der Wandung des Saugkanals eine thermische Kopplung des Heizelements mit dem Saugrohr bzw. dem Zylinderkopf über die Aufhängung im Kanal erreichen läßt . Dadurch wird eine Überhitzung des Heizelements während der Warmlaufphase der Verbrennungskraftmaschine durch die Übertragung überschüssiger Wärme vom Heizelement an die Wandung verhindert. In umgekehrter Richtung, wenn die elektrische Beheizung bei betriebswarmen Motor ausgeschaltet ist, erfolgt zur Vermeidung einer zu starken Abkühlung des Heizelements infolge von Kraftstoffverdampfungskühlung und Konvektionskühlung durch die Luftströmung ein Wärmeübergang vom relativ warmen Saugrohr bzw. Zylinderkopf auf das Heizelement. Eine Kondensation von Kraftstoffbestandteilen am Heizelement, auch bei betriebswarmer Verbrennungskraftmaschine, kann dadurch zuverlässig ausgeschlossen werden. Außerdem dienen die Haltestege als Anschlußklemmen, um das Heizelement an einer elektrischen Spannungsquelle anzuschließen. Die Haltestege sind elektrisch leitend mit den Leiterbahnen verbunden, um deren Beheizung zu ermöglichen.

Das Heizelement kann zumindest auf der dem eingespritzten Kraftstoff zugewandten Seite mit einer vorzugsweise bogenförmigen Oberflächenprofilierung versehen sein. Hierbei ist von Vorteil, daß die Verdampfung des Kraftstoffs auf dem Heizelement durch die vergrößerte Oberfläche verbessert wird, so daß ein verbesserter Wärmeübergang vom Heizelement auf die Kraftstoffbestandteile bewirkt wird. Hinsichtlich einer besseren Verwirbelung des Kraftstoffluftgemischs auf dem Weg in den Brennraum der Verbrennungskraftmaschine kann die Oberflächenprofilierung bogenförmig gestaltet sein, bzw. das gesamte Heizelement um die Längsachse leicht verdrillt sein, um das Gemisch mit einem Drall zu versehen, welcher eine möglicherweise unerwünschte Ladungsschichtung im Brennraum vermeidet. Außerdem wird durch die Oberflächenprofilierung bewirkt, daß die mittlere Verweildauer des Kraftstoffs auf dem Heizelement für eine vollständige Verdampfung des aufgespritzten Kraftstoffs zuverlässig ausreicht.

Das Heizelement kann einen sich in Strömungsrichtung stufenlos verändernden, vorzugsweise verringernden Wölbungsradius und/oder eine sich stufenlos verändernde, vorzugsweise verringernde Rinnentiefe aufweisen. Hierbei kann unter der Bedingung eines weitgehend stationären Motorbetriebs von Vorteil sein, daß der auf das Heizelement auftreffende Kraftstoff zunächst gut geschützt vor der vorbeistreichenden Luftströmung eine ausreichend lange Zeit zur vollständigen Verdampfung hat, wobei der verdampfte Kraftstoff anschließend von der Luftströmung im Saugkanal in Richtung der Verbrennungskraftmaschine mitgerissen wird. Durch eine derartige Ausgestaltung wird außerdem zuverlässig verhindert, daß der Kraftstoff beim Auftreffen auf das Heizelement abgelenkt und vor seiner Verdampfung an der Kanalwandung angelagert wird. Eine derartige Ausgestaltung des Heizelements kommt dem Betriebsverhalten der kalten Verbrennungskraftmaschine zugute. Unter den Bedingungen eines stark dynamischen Motorbetriebs kann es demgegenüber von Vorteil sein, daß die Verweilzeit des Kraftstoffs auf dem Heizelement eng begrenzt ist. Derartige Verhältnisse sind prinzipbedingt durch die schlanke, strömungsgünstige Bauart des Heizelements und die allseitige soweit wie möglich ungestörte Umströmung des Elements gegeben.

Nach einer Ausgestaltung kann es vorgesehen sein, daß sich das Heizelement in einem spitzen Winkel zur Längsachse des eingespritzten Kraftstoffstrahls erstreckt und mit diesem einen Winkel α von 1 bis 90° bevorzugt von 5 bis 45° einschließt und daß sich das Heizelement im wesentlichen parallel zu den Stromlinien des Saugkanals erstreckt. Dadurch ist einerseits gewährleistet, daß der flüssige Kraftstoff beim Auftreffen auf das Heizelement im wesentlichen nur in Richtung der Verbrennungskraftmaschine abgelenkt wird und die Kraftstofftropfen beim Auftreffen zerplatzen. Andererseits wird durch das sich parallel zur Längsachse des Saugkanals erstreckende Heizelement nur eine vernachlässigbar geringe Vergrößerung des Strömungswiderstands im Saugkanal bewirkt, so daß eine gute Füllung der Brennräume der angeschlossenen Verbrennungskraftmaschine gewährleistet bleibt.

Das Heizelement kann signalleitend mit einem Steuergerät verbunden sein, wobei das Steuergerät durch die Motorsteuerung gebildet sein kann. Hierbei ist von Vorteil, daß das Heizelement in Abhängigkeit vom Motorerwärmungszustand, der beispielsweise durch die Kühlwasser- und/oder Motoröl- und/oder Motorbauteiltemperatur beschrieben werden kann, ansteuerbar ist. Neben einer kontinuierlichen Beheizung des Heizelements bis zum Erreichen der gewünschten Motortemperatur kann das Heizelement beispielsweise auch getaktet beheizt werden. Die Taktung kann sich beispielsweise nach der Kraftstoffeinspritzmenge bzw. der Einspritzzeit richten. Um Schäden am Heizelement zu vermeiden, kann seine Temperatur beispielsweise durch eine Messung des Widerstands bestimmt werden. Liegt die Temperatur außerhalb vorgegebener Grenzwerte, kann diese Unregelmäßigkeit auf einem Anzeigeinstrument zur Anzeige gebracht werden.

Das Heizelement kann auf der der Verbrennungskraftmaschine zugewandten Seite spitz zulaufend ausgebildet sein. Hierbei ist von Vorteil, daß sich der am Heizelement niedergeschlagene Kraftstoff lediglich an der zum Motor gerichteten Spitze sammelt. Eine Anhäufung von Kraftstoffbestandteilen an einer breiten Abrißkante wird dadurch verhindert.

Das Heizelement kann mit einem Flansch verbunden sein, der einen Bestandteil des Saugkanals bildet, wobei der Flansch mit einer von einem Heizmedium durchströmbaren Leitung versehen ist. Insbesondere bei Querstrommotoren kann dadurch die Zeitdauer, bis im Einlaßkanal die für eine gute Gemischbildung notwendige, ausreichend hohe Temperatur erreicht ist, reduziert werden. Ermöglicht es die Dimensionierung der elektrischen Stromversorgung nicht, die Heizelemente während der gesamten Zeitdauer einzuschalten, kann es zweckmäßig sein, die Heizelemente durch bereits vom Motor erwärmte Medien, wie beispielsweise Kühlwasser, Abgas oder Motoröl zu erwärmen. In diesem Fall wird anstelle der über die Aufhängung realisierten thermischen Ankoppelung der Heizelemente an den Zylinderkopf eine längs zu Flanschebene durch den Flansch verlaufende Leitung geführt. Eine in diesem Falle erfolgte thermische Ankoppelung der Heizelemente an diese vorzugsweise von Motorkühlwasser durchströmte Leitung ermöglicht es, die elektrische Beheizung der Heizelemente bereits wenige Minuten nach dem Kaltstart des Motor abzuschalten. Es ist zweckmäßig für die Förderung des Heizmediums durch die beschriebene Leitung ein ohnehin am Motor auftretendes Druckgefälle zu nutzen, so daß eine separate Förderpumpe für dieses Medium umgangen wird.

Die Einhaltung einer bestimmten Temperatur an der Oberfläche des Heizelements kann dabei insbesondere bei der elektrischen Beheizung in Abhängigkeit vom jeweiligen Kennfeldpunkt des Motors sowohl im Sinne einer Steuerung, z.B. der Heizleistung als Funktion der Einspritzmenge, oder aber im Sinne einer Regelung erfolgen. Bei einer Regelung kann die Temperatur am Heizelement entweder durch einen separaten Sensor oder aber durch Nutzung der Temperaturabhängigkeit des elektrischen Widerstands eines elektrischen Leiters durch das Heizelement selbst erfolgen.

Eine Strommessung erfolgt bei eingeschalteter Heizung und unter Berücksichtigung der jeweiligen Klemmenspannung oder durch eine Widerstandsmessung bei kurzzeitig ausgeschalteter Heizung und einem aufgeprägten Strom. Auf diese Weise läßt sich auch eine Funktionsüberwachung der Heizelemente im Motorbetrieb erreichen.

Bei Mehrzylindermotoren kann entsprechend der Zylinderanzahl des Motors in der Regel pro Zylinder je Einheitselement im Einlaßkanal angeordnet sein. In diesem Fall ist es zweckmäßig, die einzelnen Heizelemente mit ihrer elektrischen Zuleitung in einen gemeinsamen Zwischenflansch zu integrieren. Ein derartiger gemeinsamen Zwischenflansch läßt sich dabei beispielsweise zwischen dem Zylinderkopf und dem Ansaugrohr des Motors einfügen. Demgegenüber kann es insbesondere bei Verwendung eines Kunststoffsaugrohres zweckmäßig sein, die Stromzuführung zu den Heizelementen im Saugrohr zu integrieren und die Heizelemente bei der Montage als Einzelteile bei gleichzeitiger Erreichung einer guten Auswechselbarkeit in die entsprechend gestalteten elektrischen Kontaktflächen des Saugrohrs zu fügen. Bei der Verwendung eines für mehrere Einlaßkanäle gemeinsamen Zwischenflanschs kann es bei entsprechenden baulichen Bedingungen zweckmäßig sein, Teile des Saugrohrs wie beispielsweise die Aufnahmeflächen der Einspritzdüsen in den Zwischenflansch zu integrieren.

Bezüglich der elektrischen Zuleitung zu den Heizelementen im Flansch erscheint es weiterhin sehr sinnvoll, die in Schichtaufbau unter Verwendung einer flexiblen Leiterbahn hergestellten Heizelemente mit der ebenso aufgebauten elektrischen Zuleitung als Abwicklung darzustellen, die nach Durchführung des in der Ebene erfolgten Klebevorgangs gegebenenfalls ausgestanzt und zu einem räumlichen Gebilde umgeformt werden. Im Anschluß daran läßt sich das auf diese Weise hergestellte Gesamtbauteil, bestehend aus Heizelementen und Zuleitung, beispielsweise in eine Form einlegen und sofern notwendig mit Kunststoff umspritzen, so daß ein mit Dichtflächen versehener, gut zu handhabender Gesamtflansch entsteht.

Das erfindungsgemäße Ansaugrohr wird nachfolgend anhand der beigefügten Zeichnungen näher erläutert.

In Fig. 1 ist ein Einlaßkanal einer Verbrennungskraftmaschine gezeigt, der ein Heizelement umfaßt.

In den Fig. 2 bis 4 ist ein Ausschnitt aus dem Ansaugrohr gemäß Fig. 1 gezeigt, wobei die Heizeinrichtung entlang der Linien A-A; B-B und C-C geschnitten dargestellt ist.

In Fig. 5 ist eine Gesamtleiterbahn als Einzelteil in einer Abwicklung gezeigt.

In Fig. 6 sind die vier in einem gemeinsamen Zwischenflansch integrierten Heizelemente eines Vierzylindermotors als perspektivischer Halbschnitt dargestellt.

In Fig. 7 ist ein zweites Ausführungsbeispiel des Ansaugrohrs, ähnlich dem Ausführungsbeispiel aus Fig. 1 gezeigt.

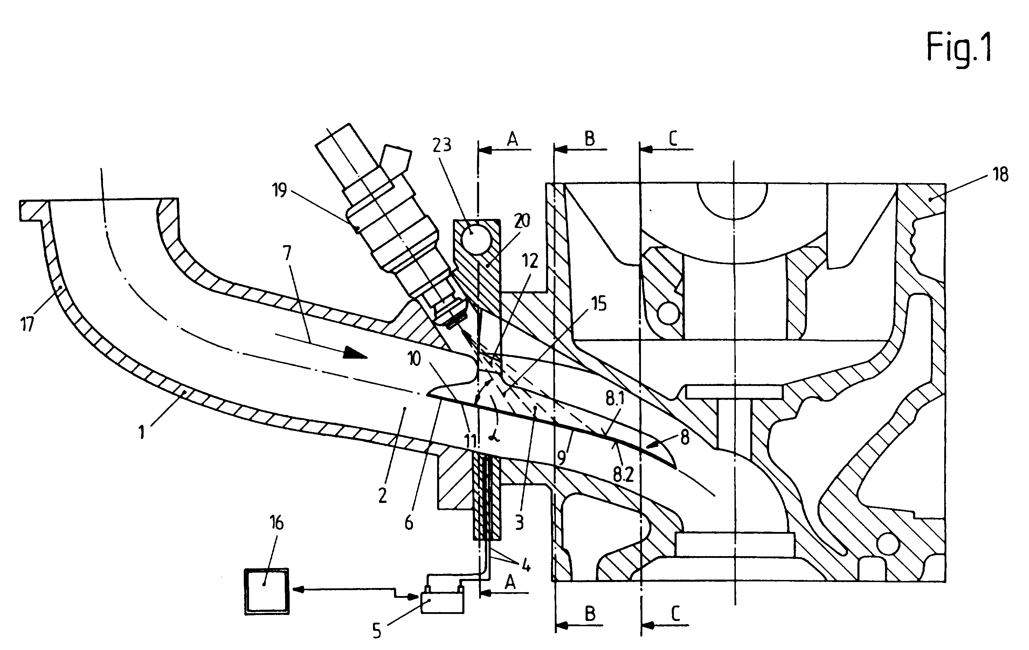

In Fig. 1 ist ein Ansaugrohr 1 für eine Verbrennungskraftmaschine mit zumindest einem Saugkanal 2 gezeigt, wobei innerhalb des Saugkanals 2 ein Heizelement 3 angeordnet ist. Ein Ansaugkrümmer 17 ist an den Zylinderkopf 18 der Verbrennungskraftmaschine angeflanscht, wobei der Ansaugkrümmer 17 mit einem Einspritzventil 19 versehen ist, das Kraftstoff in den Saugkanal 2 einspritzt. Das Heizelement 3 ist durch ein Verbundteil 6 gebildet, das quer zur Strömungsrichtung 7 rinnenförmig ausgebildet ist. Das Heizelement 3 ist allseitig umströmbar innerhalb des Saugkanals 2 angeordnet und elektrisch beheizbar. Die Anschlußklemmen 4 sind an eine elektrische Stromquelle 5 angeschlossen. Das Heizelement 3 hat einen schichtweisen Aufbau, wobei die flexible Leiterbahn 9 aus elektrisch leitfähigem Werkstoff in diesen Ausführungsbeispielen beiderseitig von einer Klebefolie bedeckt und zwischen zwei Aluminiumblechen 10, 11 angeordnet ist. Die Dicke der Aluminiumbleche 10, 11 beträgt in diesem Ausführungsbeispiel 0,5 mm, wobei die einfache Herstellbarkeit des Heizelements 3 von hervorzuhebender Bedeutung ist. Das zunächst ebene Verbundteil 6 wird durch einen Tiefziehvorgang in eine rinnenförmige Gestalt überführt, wobei die Aluminiumbleche 10, 11 mit Haltestegen 12 einstückig ineinander übergehend ausgebildet sind und wobei die Haltestege 12 mit dem Zwischenflansch 20 verbunden sind. Die ebenen Aluminiumbleche 10, 11 können beispielsweise durch Stanzen hergestellt werden. Das Heizelement 3 ist in einem Winkel zum eingespritzten Kraftstoffstrahl 15 angeordnet, der in diesem Ausführungsbeispiel 30° beträgt. Das Heizelement 3 ersteckt sind parallel zur Längsachse des Saugkanals 2 und ist signalleitend mit der Motorsteuerung 16 der Verbrennungskraftmaschine verbunden.

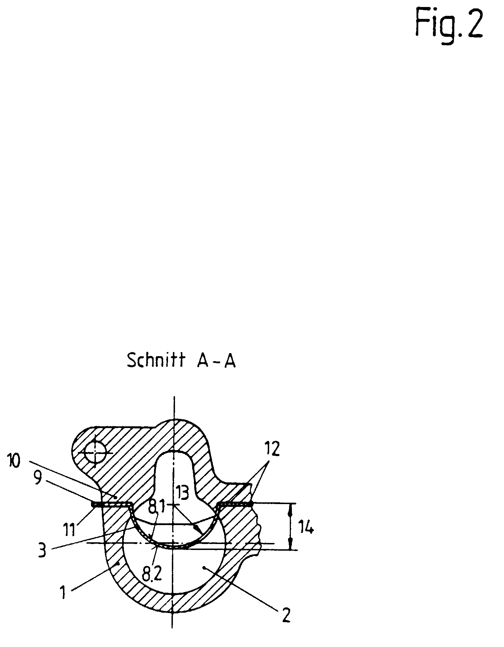

In den Fig. 2 bis 4 ist jeweils ein Schnitt durch das Heizelement 3 gemäß Fig. 1 gezeigt. In Fig. 2 ist der Schnitt A-A aus Fig. 1 dargestellt. Der rinnenförmige Querschnitt sowie die Haltestege 12 sind hier deutlich zu erkennen, wobei der Wölbungsradius 13 entlang der gesamten Erstreckung des Heizelements in Strömungsrichtung 7 von übereinstimmender Größe ist. Diese Ausgestaltung ist in fertigungstechnischer Hinsicht vorteilhaft. Im Bereich der Haltestege 12 weist das Heizelement 3 eine Rinnentiefe 14 auf, die größer ist als in den in Strömungsrichtung benachbarten Bereichen. Der durch das Einspritzventil 19 eingespritzte Kraftstoff kann dadurch, insbesondere während der Warmlaufphase der Verbrennungskraftmaschine zuverlässig von der den Saugkanal 2 begrenzenden, relativ kalten Wandung ferngehalten werden, wodurch eine weitgehende Verdampfung des eingespritzten Kraftstoffs und ein vorteilhaftes Betriebsverhalten der Verbrennungskraftmaschine bedingt ist. Mit zunehmender Erstreckung des Heizelements 3 in Richtung des Brennraums der Verbrennungskraftmaschine wird die Rinnentiefe 14 stufenlos und ineinander übergehend verringert.

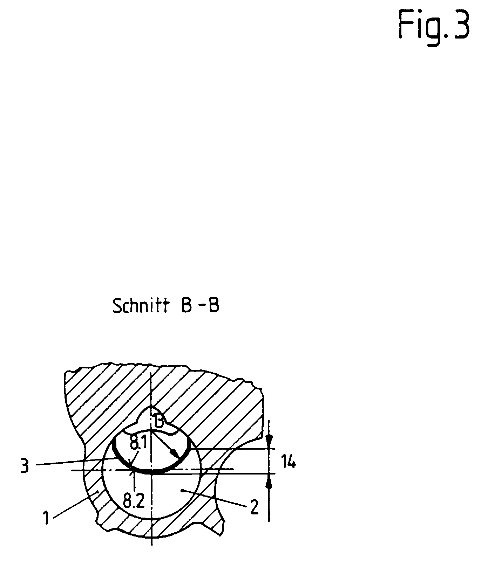

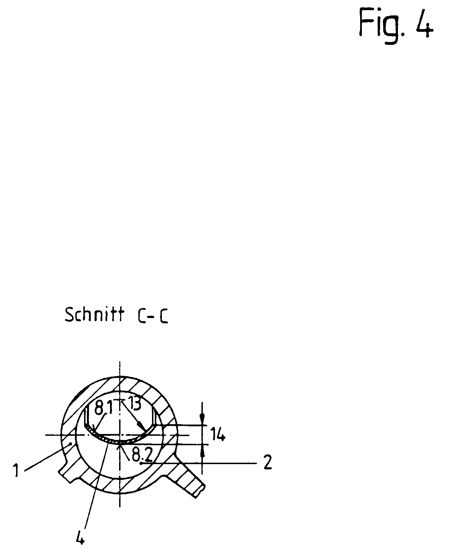

In den Fig. 3 und 4 ist der Querschnitt des Heizelements 3 jeweils entsprechend der Schnitte aus Fig. 1 gezeigt. Das Verhältnis der tiefsten Stelle der Wannentiefe 14 zur flachsten Stelle liegt bevorzugt zwischen 1,1 und 3, in diesem Ausführungsbeispiel bei 2,5. Das Längen- Breitenverhältnis des Heizelements 3 beträgt bevorzugt 1,5 bis 3, in diesem Ausführungsbeispiel 2.

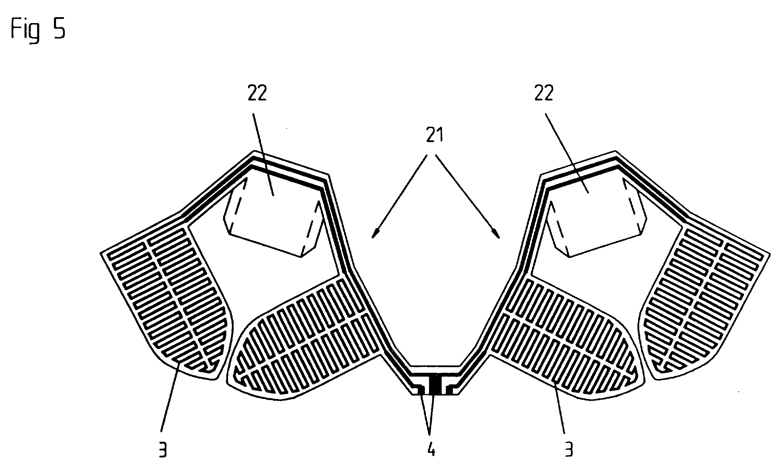

Der Fig. 5 kann der Aufbau der flexiblen Leiterbahn 9 des Heizelements 3 als Einzelteil in abgewickelter Darstellung entnommen werden, wobei das Heizelement aus einem elektrisch leitfähigen Werkstoff besteht. Die Abmessungen der Leiterbahn sind an die Größe des Heizelements 3 angepaßt, wobei die Stromzuführung zur Leiterbahn 9 mit den als Anschlußklemmen 4 ausgebildeten Haltestegen 12 der Aluminiumbleche 10, 11 elektrisch leitend verbunden sind.

Die Gesamtleiterbahn besteht in diesem Ausführungsbeispiel aus vier miteinander verbundenen Heizelementen für eine Verbrennungskraftmaschine mit vier in Reihe angeordneten Zylindern, wobei die einzelnen Heizelemente 3 durch Wärmeeinleitflächen 22 miteinander verbunden sind. Es ist von hervorzuhebender Bedeutung, daß die Heizelemente 3 in einem Flansch 20 zusammengefaßt sind und insgesamt nur eine Stromzuführung über die Anschlußklemmen 4 aufweisen.

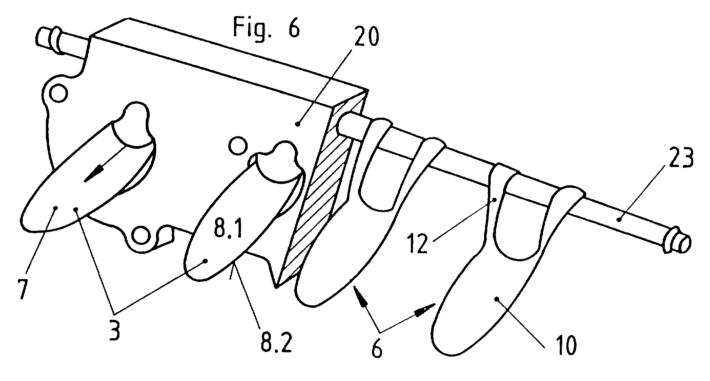

In Fig. 6 ist eine perspektivische Darstellung von vier miteinander verbundenen Heizelementen 3 gezeigt, wobei die Heizelemente zusätzlich zu der elektrischen Beheizung durch bereits vom Motor erwärmte Medien, in diesem Ausführungsbeispiel durch das Kühlwasser erwärmt werden können. Dazu ist es vorgesehen, daß eine thermische Ankoppelung der Heizelemente durch eine an den Zylinderkopf längs zur Flanschebene durch den Flansch 20 verlaufende Leitung 23 verwirklicht wird. Hierbei ist von Vorteil, daß bereits wenige Minuten nach dem Kaltstart des Motors die elektrische Beheizung der Heizelemente 3 abgeschaltet werden kann und zur Beheizung ein ohnehin erwärmtes Medium benutzt werden kann.

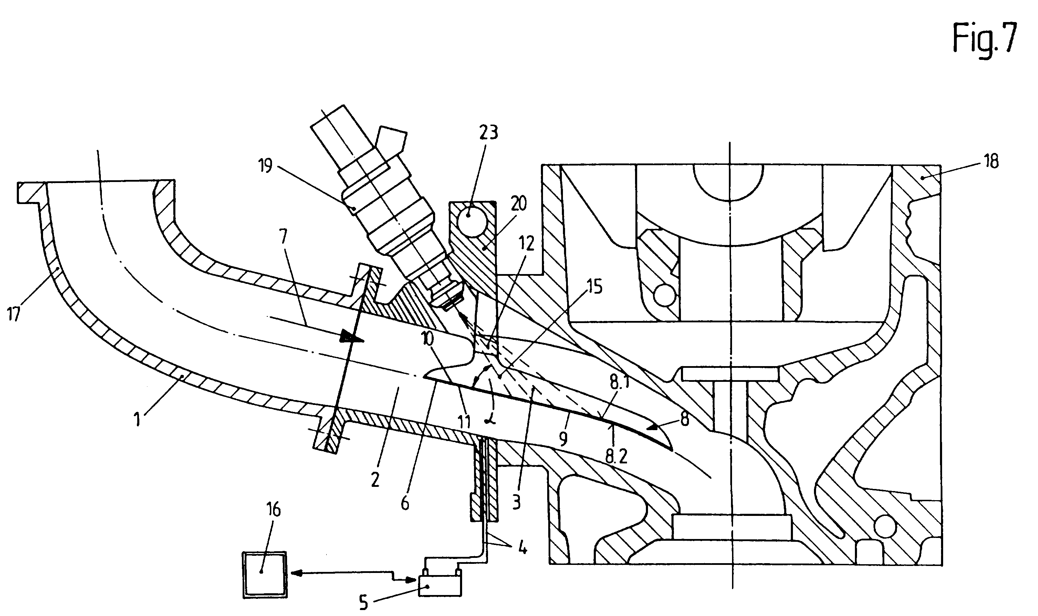

In Fig. 7 ist der Einlaßkanal einer Verbrennungskraftmaschine, ähnlich wie in Fig. 1 dargestellt. Im Gegensatz zu dem Ausführungsbeispiel aus Fig. 1 ist hier der Zwischenflansch 20, der die Heizelemente 3 aufnimmt, wesentlich breiter ausgeführt, so daß die Aufnahmeflächen der Einspritzdüsen 19 in den Flansch 20 integriert werden können. Zusätzlich zu der elektrischen Beheizung können die Heizelemente 3 auch durch bereits vom Motor erwärmte Medien beheizt werden. Diese Medien, vorzugsweise Kühlwasser, werden durch die im Schnitt dargestellte Leitung 23 geführt. Die durch das in der Leitung 23 strömende Medium herangeführte Wärme wird über die Haltestege 12 auf die Heizelemente 3 übertragen.

## Patentansprüche

1. Heizmodul (1) für eine Verbrennungskraftmaschine mit äußerer Gemischbildung und Kraftstoffeinspritzung sowie zumindest einem Saugkanal (2) und einer Einspritzdüse (19), wobei im Saugkanal (2) ein allseitig umströmbares, elektrisch beheizbares Heizelement (3) angeordnet ist, das mit Anschlußklemmen (4) an eine elektrische Stromquelle (5) anschließbar ist und wobei das Heizelement (3) durch ein schichtweise aufgebautes Verbundteil (6) gebildet ist, das einen quer zur Strömungsrichtung (7) rinnenförmigen Querschnitt aufweist, dadurch gekennzeichnet, daß das Heizelement (3) eine Oberfläche (8) aus metallischem Werkstoff umfaßt, daß zwischen einer rinnenförmigen Oberflächenschicht (8.1) und einer darunterliegenden Schicht (8.2) eine flexible Leiterbahn (9) aus elektrisch leitfähigem Werkstoff angeordnet ist und daß die Leiterbahn (9) und der metallische Werkstoff adhäsiv verbunden sind.

2. Heizmodul nach Anspruch 1, dadurch gekennzeichnet, daß der metallische Werkstoff durch zwei Aluminiumbleche (10, 11) gebildet ist, die eine Dicke von 0,2 bis 1 mm aufweisen.

3. Heizmodul nach Anspruch 2, dadurch gekennzeichnet, daß die Aluminiumbleche (10, 11) mit einstückig angeformten Haltestegen (12) versehen sind, die an der den Saugkanal (2) begrenzenden Wandung festgelegt sind.

4. Heizmodul nach Anspruch 1, dadurch gekennzeichnet, daß der metallische Werkstoff aus zwei Kupferblechen besteht, die eine Dicke von 0,2 bis 1 mm aufweisen.

5. Heizmodul nach einem der Ansprüche 1 bis 4, dadurch gekennzeichnet, daß das Heizelement (3) auf der dem eingespritzten Kraftstoff zugewandten Seite mit einer bogenförmigen Oberflächenprofilierung versehen ist.

6. Heizmodul nach einem der Ansprüche 1 bis 5, dadurch gekennzeichnet, daß das Heizelement (3) einen sich in Strömungsrichtung (7) stufenlos verändernden Wölbungsradius (13) und/oder eine sich stufenlos verändernde Rinnentiefe (14) aufweist.

7. Heizmodul nach einem der Ansprüche 1 bis 6, dadurch gekennzeichnet, daß sich das Heizelement (3) in einem Winkel (α) zur Längsachse des eingespritzten Kraftstoffstrahls (15) erstreckt und mit diesem einen Winkel (α) von 1 bis 90° einschließt und daß sich das Heizelement (3) im wesentlichen parallel zu den Stromlinien des Saugkanals (2) erstreckt.

8. Heizmodul nach einem der Ansprüche 1 bis 7, dadurch gekennzeichnet, daß das Heizelement (3) signalleitend mit einer Motorsteuerung (16) verbunden ist.

9. Heizmodul nach einem der Ansprüche 1 bis 8, dadurch gekennzeichnet, daß das Heizelement (3) auf der der Verbrennungskraftmaschine zugewandten Seite spitz zulaufend ausgebildet ist.

10. Heizmodul nach einem der Ansprüche 1 bis 9, dadurch gekennzeichnet, daß das Heizelement (3) mit einem Flansch (20) verbunden ist, der einen Bestandteil des Saugkanals (2) bildet und daß der Flansch (20) mit einer von einem Heizmedium durchströmbaren Leitung (23) versehen ist, die wärmeleitend über die Haltestege (12) mit dem Heizelement (3) verbunden ist.

## Claims

1. A heating module (1) for an internal combustion engine with external mixture formation and fuel injection and with at least one intake duct (2) and one injection nozzle (19), there being arranged in the intake duct (2) an electrically heatable heating element (3) around which flow is possible on all sides and which can be connected by means of connection terminals (4) to an electric current source (5), and the heating element (3) being formed by a composite part (6) which is built up in layers and has a cross-section which is channel-shaped transversely to the direction of flow (7), characterized in that the heating element (3) has a surface (8) of metallic material, in that a flexible conductor track (9) made of electrically conductive material is arranged between a channel-shaped surface layer (8.1) and an underlying layer (8.2), and in that the conductor track (9) and the metallic material are adhesively bonded.

2. A heating module according to claim 1, characterized in that the metallic material is formed by two aluminium sheets (10, 11) which have a thickness of 0.2 to 1 mm.

3. A heating module according to claim 2, characterized in that the aluminium sheets (10, 11) are provided with integrally formed retaining webs (12) which are fixed to the wall bounding the intake duct (2).

4. A heating module according to claim 1, characterized in that the metallic material consists of two copper sheets which have a thickness of 0.2 to 1 mm.

5. A heating module according to any one of claims 1 to 4,characterized in that the heating element (3) is provided with an arcuate profile on the side facing the injected fuel.

6. A heating module according to any one of claims 1 to 5, characterized in that the heating element (3) has a radius of curvature (13) which changes in a stepless manner in the direction of flow (7) and/or has a channel depth (14) which changes in a stepless manner in the direction of flow (7).

7. A heating module according to any one of claims 1 to 6, characterized in that the heating element (3) extends at an angle (α) to the longitudinal axis of the injected fuel jet (15) and encloses with the latter an angle (α) of 1 to 90°, and in that the heating element (3) extends essentially parallel to the streamlines of the intake duct (2).

8. A heating module according to any one of claims 1 to 7, characterized in that the heating element (3) is connected to an engine control system (16) in a manner which allows the transmission of signals.

9. A heating module according to any one of claims 1 to 8, characterized in that the heating element (3) is designed in such a way as to taper to a point on the side facing the internal combustion engine.

10. A heating module according to any one of claims 1 to 9, characterized in that the heating element (3) is connected to a flange (20) which forms part of the intake duct (2), and in that the flange (20) is provided with a conduit (23) through which a heating medium can flow and which is connected to the heating element (3) in a thermally conductive manner by the retaining webs (12).

## Revendications

1. Module de chauffage (1) pour un moteur à combustion interne à formation du mélange et injection du carburant extérieures, comprenant au moins une conduite d'aspiration (2) et un injecteur (19), un élément de chauffage (3) pouvant être chauffé électriquement et laissant place à un écoulement sur tous ses côtés étant situé dans la conduite d'aspiration (2), lequel élément de chauffage peut être relié à une source de courant électrique (5) par des bornes de connexion (4), et l'élément de chauffage (3) étant formé par une pièce composée (6) ayant une construction en couches qui présente, perpendiculairement à la direction d'écoulement (7), une section transversale en forme de goulotte, caractérisé en ce que l'élément de chauffage (3) comprend une surface (8) faite d'un matériau métallique, en ce qu'une piste conductive flexible (9) faite d'un matériau électroconducteur est située entre une couche superficielle (8.1) en forme de goulotte et une couche (8.2) située en-dessous, et en ce que la piste conductive (9) et le matériau métallique sont reliés de manière adhésive.

2. Module de chauffage selon la revendication 1, caractérisé en ce que le matériau métallique est formé par deux tôles d'aluminium (10, 11) qui ont une épaisseur allant de 0,2 à 1 mm.

3. Module de chauffage selon la revendication 2, caractérisé en ce que les tôles d'aluminium (10, 11) sont pourvues de parties intermédiaires de support (12) solidaires avec elles qui sont fixées sur la paroi délimitant la conduite d'aspiration (2).

4. Module de chauffage selon la revendication 1, caractérisé en ce que le matériau métallique est formé par deux tôles de cuivre qui ont une épaisseur allant de 0,2 à 1 mm.

5. Module de chauffage selon l'une des revendications 1 à 4, caractérisé en ce que l'élément de chauffage (3) est pourvu, sur le côté tourné vers le carburant injecté, d'un profilage superficiel voûté.

6. Module de chauffage selon l'une des revendications 1 à 5, caractérisé en ce que l'élément de chauffage (3) a un rayon de courbure (13) qui se modifie progressivement dans la direction d'écoulement (7) et/ou une profondeur (14) de goulotte qui se modifie progressivement dans cette direction.

7. Module de chauffage selon l'une des revendications 1 à 6, caractérisé en ce que l'élément de chauffage (3) s'étend suivant un angle ( ) par rapport à l'axe longitudinal du jet de carburant (15) injecté et forme avec celui-ci un angle ( ) mesurant de 1 à 90 , et en ce que l'élément de chauffage (3) s'étend essentiellement de manière parallèle aux lignes aérodynamiques de la conduite d'aspiration (2).

8. Module de chauffage selon l'une des revendications 1 à 7, caractérisé en ce que l'élément de chauffage (3) est relié à une commande à moteur (16) par une liaison de signalisation.

9. Module de chauffage selon l'une des revendications 1 à 8, caractérisé en ce que l'élément de chauffage (3) est exécuté de manière à prendre une forme pointue du côté tourné vers le moteur à combustion interne.

10. Module de chauffage selon l'une des revendications 1 à 9, caractérisé en ce que l'élément de chauffage (3) est relié à une bride (20) formant une partie de la conduite d'aspiration (2), et en ce que la bride (20) est pourvue d'une conduite (23) dans laquelle peut circuler un milieu chauffant, qui est reliée de manière thermoconductrice à l'élément de chauffage (3) par les parties intermédiaires de support (12).
